# EUROPÄISCHE PATENTSCHRIFT

(11) **EP 0 646 265 B1**
(45) Veröffentlichungstag und Bekanntmachung des Hinweises auf die Patenterteilung: **27.03.1996**
(21) Anmeldenummer: 93912592.8
(22) Anmeldetag: 16.06.1993
(51) Int. Cl.: G08B 13/14

(54) **VERFAHREN UND ANORDNUNG ZUR SICHERUNG VON PERSONEN ODER GEGENSTÄNDEN**
METHOD AND DEVICE FOR THE PROTECTION OF PEOPLE OR OBJECTS
PROCEDE ET INSTALLATION POUR ASSURER LA SECURITE DE PERSONNES OU D'OBJETS

(30) Priorität: 16.06.1992 DE 4219678; 20.11.1992 DE 4239098
(43) Veröffentlichungstag der Anmeldung: 05.04.1995
(73) Patentinhaber: KÜHNERT, Eduard, D-42697 Solingen (DE)
(72) Erfinder: KÜHNERT, Eduard, D-42697 Solingen (DE)
(74) Vertreter: Lippert, Hans-Joachim, Dipl.-Ing.
(86) Internationale Anmeldenummer: DE9300521
(87) Internationale Veröffentlichungsnummer: WO9325983

(56) Entgegenhaltungen:
- EP-A- 0 073 681
- EP-A- 0 378 301
- WO-A-92/02911
- DE-A- 3 618 416
- GB-A- 2 248 331
- US-A- 4 871 997

## Beschreibung

Die Erfindung betrifft ein Verfahren zur Sicherung von Personen oder Gegenständen, bei dem bei einer unerlaubten Annäherung oder Entfernung von Personen oder Gegenständen ein Warnsignal ausgelöst wird, wobei von einem Sender ein Signal gesendet wird, mittels dem eine Sperrung einer Auslösung des Warnsignales erfolgt, bis die Entfernung zwischen Sender und Empfänger eine vorbestimmbare Größe über- oder unterschreitet oder der Sendeweg zwischen Sender und Empfänger unterbrochen wird, indem aus dem von einem Empfänger erhaltenen Empfangssignal ein die Entfernung zwischen dem Sender und dem Empfänger repräsentierendes Entfernungssignal ermittelt und mit einem voreinstellbaren Sollwert verglichen wird und eine positive oder eine negative Abweichung vom Sollwert das Warnsignal auslöst.

Weiterhin betrifft die Erfindung eine Anordnung zur Sicherung von Personen oder Gegenständen mit einem ersten Sicherungselement, welches an einem zu sichernden Gegenstand befestigbar ist, und einem tragbaren oder beliebig befestigbaren zweiten Sicherungselement, wobei eine drahtlose Verbindung oder eine Leitungsverbindung zwischen dem ersten und dem zweiten Sicherungselement besteht, und mit einem durch Abstandsveränderung zwischen den Sicherungselementen oder durch Verbindungsunterbrechung auslösbaren Warnsignalgeber, der in oder in der räumlichen Nähe eines der Sicherungselemente angeordnet ist.

Es sind verschiedene Verfahren und Anordnungen zur Sicherung von Personen bekannt, die automatisch oder manuell ausgelöst ein Warnsignal abgeben.

So ist eine Anordnung in Form eines Einzelgerätes bekannt, welches mittels einer flexiblen Schnur an dem zu sichernden Gegenstand befestigbar ist. Dieses Gerät kann mittels eines persönlichen Kodes aktiviert werden. Im aktivierten Zustand gibt dieses Gerät einen Warnton ab, sobald eine Bewegung des zu sichernden Gegenstandes und damit des Gerätes eintritt.

Dabei ist es nachteilig, daß jedes Mal, wenn der Gegenstand zu sichern ist, die Aktivierung vorgenommen werden muß. Da dies relativ zeitaufwendig ist und auch die Deaktivierung vorgenommen werden muß, da es ansonsten zu unangenehmen Fehlalarmauslösungen kommt, unterbleibt sehr oft die Aktivierung, so daß keine Sicherung gegeben ist. Beispielsweise bei kurzzeitigem Abstellen von Reisegepäckstücken am Checkin-Schalter oder in Bahnhofshallen, wo eine Diebstahlgefahr besonders hoch ist, wird eine Sicherung aus Bequemlichkeit zumeist nicht vorgenommen.

Weiterhin ist eine Anordnung bekannt, die aus einem Hauptgerät und peripheren Meldern besteht. Dabei weist das Hauptgerät einen Netzanschluß auf und steht mit den peripheren Meldern derart in Verbindung, daß ein Warnsignal am Hauptgerät ausgelöst wird, wenn ein peripherer Melder ein Signal an das Hauptgerät sendet, was genau dann geschieht, wenn im Erfassungsbereich eines Melders eine Bewegung eintritt.

Mit dieser Anordnung kann je nach Einsatz eine Sicherung von Gegenständen oder von Personen erfolgen, die jedoch stets auf eine stationäre Verwendung beschränkt bleibt und darüberhinaus nur eine Meldung gibt, wenn eine Bewegung im Erfassungsbereich stattfindet. Eine Kennzeichnung beispielsweise des Aufenthaltsortes entwendeter Gegenstände kann nicht entnommen werden.

Weiterhin sind noch Alarmeinrichtungen bekannt, die vorzugsweise zur Türsicherung vorgesehen sind. Dabei werden zwei Sicherungselemente verwendet, die an der Tür und am Türrahmen befestigt sind und die zueinander, beispielsweise über eine magnetische Kopplung, in Verbindung stehen. Wird diese Verbindung unterbrochen, was beim Öffnen der Türe geschieht, wird ein Warnsignal abgegeben. Eine Aktivierung / Deaktivierung der Alarmeinrichtung und ein Ausschalten des Warnsignales kann über einen persönlichen Kode erfolgen. Die Warnsignalauslösung kann auch zeitverzögert eingestellt werden.

Eine derartige Anordnung ist zumeist auf einen stationären Einsatz beschränkt und findet nur bei üblicherweise räumlich sehr eng beieinanderliegenden Gegenständen Anwendung, da das Bestehen der Verbindung zwischen beiden Sicherungselementen nur so gewährleistet werden kann.

Aus der deutschen Offenlegungsschrift 36 18 416 ist eine Vorrichtung zum Überwachen von Gepäckstücken oder dergleichen bekannt, die als Satellitengeräte ausgeführte erste Sicherungselemente und ein als Zentralgerät ausgeführtes zweites Sicherungselement beinhaltet. Die ersten Sicherungselemente und das zweite Sicherungselement sind durch drahtlose Überwachungsstrecken kommunikativ miteinander verbunden.

Dabei werden von dem Zentralgerät Signale an die Satellitengeräte gesendet, die bewirken, daß in den Satellitengeräten Rücksendesignale abgestrahlt werden, die einen dem jeweiligen Satellitengerät zugeordneten Kode aufweisen.

Nachteilig ist bei dieser Vorrichtung, daß neben der Notwendigkeit des ständigen Sendens der Satellitengeräte, was einen nachteiligen hohen Energieverbrauch zur Folge hat, an dem Zentralgerät lediglich festgestellt werden kann, ob die Gegenstände sich innerhalb der Überwachungsstrecken befinden oder nicht. Befinden sie sich außerhaLb der Überwachungsstrecken oder sind dieselben unterbrochen, ist eine Suche nach den verlorenen Gegenständen nicht möglich.

Die bekannten Anordnungen beinhalten im wesentlichen stets zwei Sicherungselemente, die miteinander drahtlos verbunden sind. Dabei wird das eine Sicherungselement im wesentlichen an dem zu sichernden Gegenstand oder zu sichernden Person befestigt und das andere Sicherungselement in dem Raum angeordnet, der den Sicherungsbereich darstellt oder an der Person getragen, die den Gegenstand sichern will.

In der EP-A-0073681 ist eine Lösung beschrieben, in der in einem Sicherungselement ein Sender angeordnet ist, der ein gepulstes Ultraschallsignal an einen Empfänger im zweiten Sicherungselement sendet. Die Anordnung im zweiten Sicherungselement arbeitet als sogenannter Transmitter, bei dem das empfangene Signal verstärkt und über einen Sender wieder an das erste Sicherungselement gesendet wird. Dort steht ein Empfänger zur Verfügung, der die empfangenen Signalimpulse an eine Auswerteschaltung weiterleitet. Dort wird das empfangene Signal dahingehend ausgewertet, daß eine Integration der Empfangs impulse erfolgt, die innerhalb eines vorgesehenen Zeitabschnittes zu einem voreingestellten Wert führt. Wird dieser Wert nicht erreicht, erfolgt eine Alarmsignalauslösung. Dies ist zumeist dann der Fall, wenn die Entfernung zwischen den beiden Sicherungselementen zu groß oder die Verbindung unterbrochen ist.

In ähnlicher Art und Weise arbeitet ein Überwachungs-Alarmsystem nach der GB-A-2248331. Hierbei wird von einer Basisstation ein Abfragesignal an ein tragbares Übertragungsmittel gesandt. Dieses sendet ein Signal an einen Empfänger in der Basisstation, der aus dem empfangenen Signal ein Entfernungssignal gewinnt, welches die Entfernung zwischen der Basisstation und dem Übertragungsmittel repräsentiert. Nach einem Vergleich mit einem voreingestellten Wert wird ein Alarm ausgelöst, wenn eine Entfernung festgestellt wird, die größer als der voreingestellte Wert ist.

In der US-A-4871997 ist ein Annäherungssensor-Anordnung beschrieben. Hierdurch ist es möglich, die Sicherungselemente, zumindest ein Sicherungselement so weit zu miniaturisieren, daß es die Größe einer Scheckkarte annehmen kann. Auch diese Anordnung besteht aus zwei Teilen. Ein Teil wird davon in einer Brieftasche, einem Portemonnaie oder in einem anderen zu sichernden Gegenstand getragen. Der andere Teil wird beispielsweise an einem Gürtel befestigt, so daß ein Alarm ausgelöst wird, wenn die Brieftasche oder das Portemonnaie aus der Reichweite gelangt.

In einem ersten Sicherungselement ist ein Übertragungsgerät angeordnet, welches einen Schwingkreis zum Aussenden eines zeitlich definierten gepulsten elektromagnetischen Signales enthält. In dem zweiten Sicherungselement ist ein Empfangsgerät eingebracht, welches Mittel zur Feststellung des zeitlich definierten gepulsten elektromagnetischen Signales enthält. Weiterhin sind darin Logikelemente angeordnet, mit denen das Pulssignal behandelt wird. Schließlich enthält das zweite Sicherungselement eine Alarmschaltung, die durch die Logikelemente ausgelöst werden kann, wenn das Empfangsgerät aus der Nähe des Übertragungsgerätes entfernt wird und das genannte Feststellungsmittel keine Pulssignale mehr wahrnimmt.

Mit einer derartigen Anordnung ist es möglich, das Senden eines Rückkopplungssignales zu vermeiden. Da das Senden von Signalen grundsätzlich ein relativ energieaufwendiger Vorgang ist, werden durch diese Anordnung in dem Empfangsgerät platzaufwendige Energiequellen vermieden. Somit kann eine Miniaturisierung bis auf Scheckkartengröße erreicht werden.

Nachteilig ist bei allen bekannten Lösungen die Tatsache, daß das Alarmsignal sofort in vollem Umfange ausgelöst wird, wenn eine Überschreitung der Sicherheitsentfernung stattfindet. Wird nämlich dieses Warnsignal häufig bei unbedeutenden Überschreitungen ausgelöst, so führt dies zu einem baldigen Ignorieren des Warnsignales. Dann wird auch zumeist das Warnsignal ignoriert, wenn ein tatsächlicher warnbedürftiger Zustand vorliegt.

Außerdem ist es bei den bekannten Lösungen nicht möglich, festzustellen, wo sich der entwendete oder verlegte Gegenstand befindet. So ist es beispielweise durchaus möglich, daß sich ein entwendeter oder verlegter Gegenstand gesucht werden soll und eine Ortung nicht ohne weiteres möglich ist.

Der Erfindung liegt somit die Aufgabe zugrunde, die Dringlichkeit aus einer Alarmauslösung erkennbar zu gestalten oder ein Wiederauffinden eines verlorenen oder entwendeten Gegenstandes zu erleichtern.

Gemäß der Erfindung wird die Aufgabe durch ein Verfahren gelöst, bei dem das Entfernungssignal eine seiner Größe entsprechende Änderung der Tonhöhe oder der Lautstärke des Warnsignales auslöst.

Durch die Änderung der Tonhöhe oder der Lautstärke des Warnsignales entsprechend der Größe des Entfernungssignals kann eine größere Sicherheit in der Wahrnehmung des Warnsignales oder in der Erkennung der Dringlichkeit des Warnsignales erreicht werden. So nimmt beispielsweise die Lautstärke zu, wenn ein Gegenstand aus dem vorbestimmten Entfernungsbereich entfernt wird, oder, wenn sich eine Person, an der das erste Sicherungselement befestigt ist, einem vorbestimmten Entfernungsbereich, beispielsweise einer Sicherheitszone, nähert.

In einer günstigen Ausgestaltung des erfindungsgemäßen Verfahrens wird das Entfernungssignal aus einer Messung des Pegels des Empfangssignales und einer Differenzbildung mit dem bekannten Pegel des Sendesignales gewonnen.

Diese Variante erfordert geringen Aufwand bei der Ermittlung des entfernungsrepräsentativen Signales, da hiermit die zumeist leicht feststellbare Signaländerung, beispielsweise die Atmplitudenänderung, die infolge einer Entfernungsvergrößerung oder -verkleinerung auftritt, genutzt wird.

Ein weitere Möglichkeit der Gewinnung des Entfernungssignales besteht in einer Messung der Zeitdifferenz zwischen den Zeitpunkten des Sendens und des Empfangens.

Dabei besteht die Möglichkeit, daß sowohl im Sender als auch im Empfänger eine zueinander synchrone Zeittakterzeugung erfolgt. Durch diesen Zeittakt werden die Sendezeitpunkte festgelegt. Damit kann die Zeitdifferenz zwischen dem Auftreten des Empfangssignales und dem Sendezeitpunkt, der durch die synchrone Zeittakterzeugung auch im Empfänger bekannt ist, gemessen werden.

Wird das Signal intermittierend gesendet, ist es möglich, den Zwischenzeitraum zwischen zwei Sendungen des Sendesignales stets gleich zu halten. Die Erzeugung des Entfernungsänderungssignal geschieht dadurch, daß die Zwischenzeiträume des Empfangssignales gemessen und mit dem jeweils vorangegangenen Zwischenzeitraum verglichen werden. Das Entfernungsänderungssignal löst dann eine seiner Größe entsprechende Änderung der Tonhöhe oder der Lautstärke des Warnsignales aus.

In einer besonders günstigen Ausgestaltung des erfindungsgemäßen Verfahrens wird von einem in räumlicher Nähe zum Empfänger befindlichen Zusatzsender zu einem in räumlicher Nähe zum Sender befindlichen Zusatzempfänger ein Zusatzsendesignal gesandt. Aus diesem Zusatzsendesignal wird ein die Entfernung zwischen dem Sender und dem Empfänger repräsentierendes Zusatzentfernungssignal ermittelt, durch das eine seiner Größe entsprechende Änderung der Tonhöhe oder der Lautstärke eines durch das Zusatzsendesignal ausgelösten Warnsignales vorgenommen wird.

In aller Regel wird das erste Sicherungselement an dem zu sichernden Gegenstand oder der zu sichernden Person befestigt und das zweite Sicherungselement entweder stationär befestigt oder bei der Aufsichtsperson getragen. Dabei steht das Interesse darin, das erste Sicherungselement so unauffällig wie möglich zu gestalten und deshalb einen hohen Energiebedarf, der platzaufwendige Batterien notwendig machen würde, zu vermeiden. Da es andererseits zweckmäßig ist, daß ein Warnsignal auch an dem zweiten Sicherungselement, welches beispielsweise bei der Aufsichtsperson getragen wird, wahrnehmbar ist, kann mit dem Zusatzsender, der sich vorzugsweise im ersten Sicherungselement befindet, über den vorzugsweise im zweiten Sicherungselement befindlichen Zusatzempfänger ein zusätzliches Warnsignal abgegeben werden. Dies geschieht erfindungsgemäß jedoch nur dann, wenn das erste Sicherungselement zur Warnsignalabgabe veranlaßt wird, was beispielsweise durch Unterbrechung des Übertragungsweges oder durch Überschreitung der voreinstellbaren Entfernung geschehen kann. Das erste Sicherungselement wird also zu einer energieaufwendigen Sendung dann und nur dann veranlaßt werden, wenn der Fall einer notwendigen Warnsignalabgabe vorliegt. Somit ist das erste Sicherungselement in aller Regel lediglich auf Empfang geschalten, was nur geringe Energie erfordert.

Weiterhin ist in einer Variante des erfindungsgemäßen Verfahrens vorgesehen, daß das Sendesignal zuschaltbar mit einem kodierten Steuersignal beaufschlagt wird, durch das das Zusatzsendesignal dauernd oder dauernd intermittierend gesendet wird.

Durch diese günstige Ausgestaltung ist es möglich, beispielsweise vom zweiten Sicherungselement aus einen Suchmodus einzuschalten, in dem durch entsprechende Mittel das abgegebene Sendesignal mit dem kodierten Steuersignal beaufschlagt wird, welches beispielsweise im ersten Sicherungselement sodann die dauernde oder dauernd intermittierende Sendung des Zusatzsendesignals auslöst, wenn eine Auslösung des Zusatzsendesignals überhaupt erforderlich ist.

Wird kein Suchmodus gewünscht, unterbleibt die Beaufschlagung mit dem kodierten Sendesignal und es ist weiterhin ausreichend, daß das Zusatzsendesignal nur kurzzeitig an den Zusatzempfänger, beispielsweise im zweiten Sicherungselement, gegeben wird, und dort dieses kurzzeitige Auftreten des Zusatzsendesignals ausreichend ist, die Abgabe eines zusätzlichen Warnsignales auszulösen.

Die Aufgabe wird weiterhin durch eine Anordnung zur Sicherung von Personen oder Gegenständen gelöst, bei der in dem ersten Sicherungselement ein zweiter Sender und in dem zweiten Sicherungselement ein korrespondierender zweiter Empfänger angeordnet ist, der mit einem zweiten Warnsignalgeber verbunden ist. Zwischen dem zweiten Empfänger und dem zweiten Warnsignalgeber ist ein Mittel zur Erzeugung eines Zusatzentfernungssignales und eine damit verbundene Modulationsschaltung zur Modulation des zweiten Warnsignalgebers angeordnet.

In einer günstigen Ausgestaltung der erfindungsgemäßen Anordnung ist vorgesehen, daß im zweiten Sicherungselement eine mit einem nach außen geführten Schalter versehene Kodierschaltung angeordnet ist, die über das Sendesignal mit einer Aktivierungsschaltung im ersten Sicherungselement zur Aktivierung des Dauersendens des Zusatzsenders in Wirkungsverbindung steht.

Die Erfindung soll nachfolgend anhand eines Ausführungsbeispieles näher erläutert werden. In den zugehörigen Zeichnungen zeigt
- Fig. 1: eine schematische Darstellung des Aufbaues einer erfindungsgemäßen Anordnung,

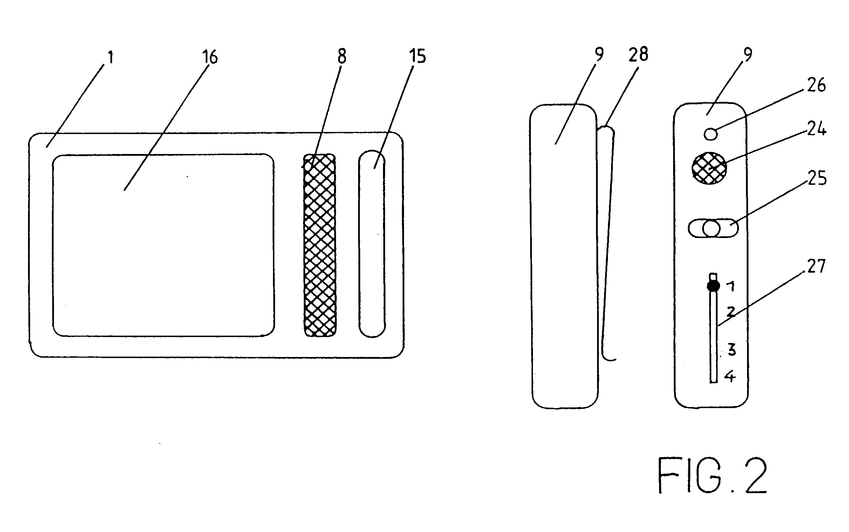

- Fig. 2: die Ansicht einer erfindungsgemäßen Anordnung mit einem ersten und einem zweiten Sicherungselement, welches in Vorder- und Seitenansicht dargestellt ist und
- Fig. 3: eine schematische Darstellung des Aufbaus einer erfindungsgemäßen Anordnung.

Das erste Sicherungselement 1 ist mit einem Ultraschallsensor 2 versehen, der über einen Verstärker 3 mit einem Dekoder 4 verbunden ist. Der Ausgang des Dekoders 4 liegt am Rücksetzeingang eines Zählers 5. Dieser Zähler 5 ist an seinem Zähleingang mit einem Taktgenerator 6 verbunden. Dadurch werden die von dem Taktgenerator 6 erzeugten Impulse gezählt, bis von dem Dekoder 4 ein Impuls auf den Rücksetzeingang des Zählers 5 gegeben wird. Damit beginnt der Zähler 5 erneut aufwärtszuzählen.

Erst wenn der Zähler 5 überläuft, gibt dessen Zählerausgang, der mit einer Warnsignalauslöseschaltung 7 verbunden ist, diese frei. Damit wird ein akustischer Warnsignalgenerator 8 eingeschaltet und es ertönt im ersten Sicherungselement 1 ein Warnsignal.

In einem zweiten Sicherungselement 9 ist ein Taktgenerator 10 vorgesehen, der in zeitlichen Abständen einen Ultraschallgenerator 11 erregt. Das Ultraschallsignal wird mittels eines Kodierers 12 in ein kodiertes Signal umgewandelt, welches über einen Verstärker 13 an einen Ultraschallwandler 14 gegeben wird, von dem es ausgestrahlt wird und zum Ultraschallsensor 2 des ersten Sicherungselementes 1 gelangt, wenn der Abstand zwischen dem ersten 1 und dem zweiten Sicherungselement 9 nur so groß ist, daß ein Empfang gesichert werden kann.

Das erste Sicherungselement 1 weist die Form einer Scheckkarte auf. Dadurch ist es möglich, diese in eine zu sichernde Tasche, beispielsweise eine Brieftasche, einfach einzulegen. Mittels einer Aussparung 15 kann das erste Sicherungselement auch als Kofferanhänger oder dergleichen verwendet werden. Zu diesem Zwecke ist auch ein Anschriftenfeld 16 vorgesehen, wodurch auch die Auffälligkeit verringert werden soll.

Der Warnsignalgenerator 8 ist nach außen geführt, um das Warnsignal ungehindert wahrnehmen zu können.

Die Warnsignalauslöseschaltung 7 ist weiterhin mit einem zweiten Ultraschallgenerator 17 versehen, der ein kodiertes Ultraschallsignal erzeugt und über einen Verstärker 18 einem zweiten Ultraschallwandler 19 zuführt.

Dieses Ultraschallsignal weist infolge einer höheren Verstärkung eine größere Amplitude auf als das Ultraschallsignal des Ultraschallwandlers 14, wodurch dessen Reichweite erheblich größer ist. Bei Auftreten eines Warnsignales am ersten Sicherungselement 1, d.h. wenn durch den Ultraschallsensor 2 kein Ultraschallsignal mehr empfangen wird, kann nunmehr im zweiten Sicherungselement ein zweiter Ultraschallsensor 20 mit einem nachfolgenden Verstärker 21 und einem Dekoder 22 eine Warnsignalauslöseschaltung 23 freigeben, die einen zweiten Warnsignalgenerator 24 aktiviert, wodurch auch im zweiten Sicherungselement 9 ein Warnsignal ertönt.

Das zweite Sicherungselement 9 ist räumlich größer gestaltet, da der Energiebedarf des Sendens erheblich größer ist und durch platzaufwendiger größere Batterien gedeckt wird, wohingegen der Energiebedarf des ersten Sicherungselementes 1 wesentlich geringer ist, da nur im Falle einer Warnsignalabgabe Sendeleistung beansprucht wird, die aus einer sogenannten Knopfzelle bereitgestellt werden kann.

Auch in dem zweiten Sicherungselement 9 ist der zweite Warnsignalgenator 24 nach außen geführt. Darüberhinaus ist ein Ein/Aus-Schalter 25 vorgesehen, mit dem das zweite Sicherungselement 9 abgeschaltet werden kann. Dabei ist es zweckmäßig, wenn bei Betätigung dieses Schalters 25 ein kodierter Ausschaltimpuls an das erste Sicherungselement 1 gegeben wird, der die Warnsignalauslöseschaltung 7 solange sperrt, bis ein erneuter Freigabeimpuls, der beim Einschalten des Schalters 25 ausgelöst wird, diese wieder für die erneute Arbeit bereitschaltet.

Wie nicht dargestellt, besteht natürlich auch die Möglichkeit, das erste Sicherungselement 1 mit einem eigenen Ein/Aus-Schalter zu versehen, der auch über einen Kodierschalter realisiert werden kann.

An dem zweiten Sicherungselement 9 ist auch eine Bereitschaftsanzeige 26 vorgesehen, die aus einer Leuchtdiode besteht, welche aufleuchtet, wenn das Sicherungselement eingeschaltet ist und / oder wenn die Batteriespannung unter einen Mindestwert sinkt. Es ist auch möglich, zur Erfüllung beider Funktionen, diese Leuchtdiode zweifarbig auszuführen oder einen zweite vorzusehen.

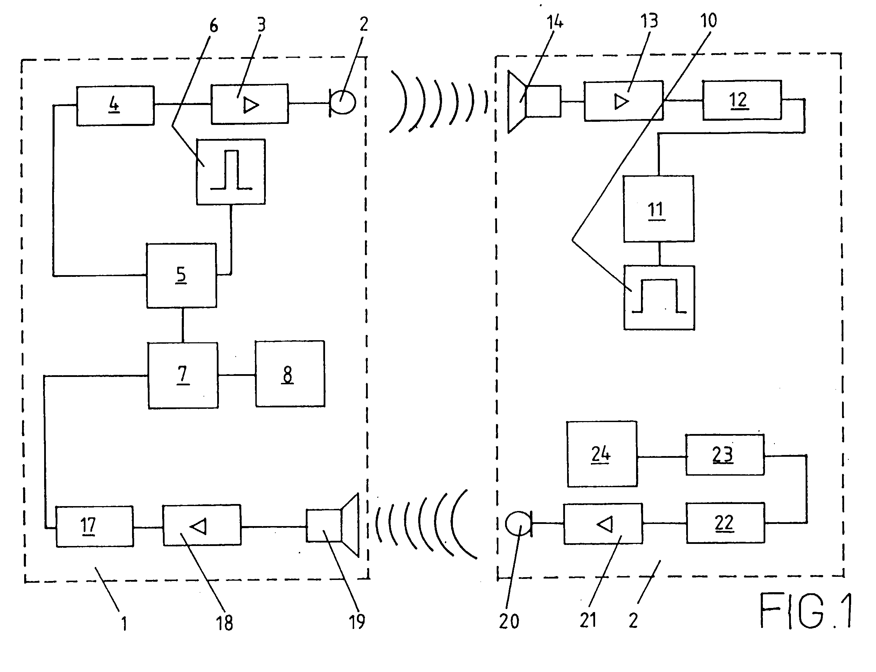

Mittels eines Potentiometers 27, welches in Fig. 1 nicht näher dargestellt ist, ist die Verstärkung am Verstärker 3 einstellbar, wodurch die Stärke des gesendeten Utraschallsignals eingestellt und damit indirekt der Abstand bestimmt werden kann, bei dem die Anordnung ein Warnsignal auslöst.

Mittels eines Clips 28 kann auch das zweite Sicherungselement 9 befestigt werden.

Das dargelegte Ausführungsbeispiel ist speziell für die Diebstahlsicherung von Gepäckstücken beschrieben. Insbesondere unter Einbeziehung anderer Sendemedien ist jedoch die Applikationsbreite wesentlich größer.

Eine erfindungsgemäße Anordnung zwischen einem Fahrzeugschlüssel und dem Kraftfahrzeug eingebracht, kann beispielsweise dazu verwandt werden, den Fahrer bei Verlassen des Fahrzeuges zu waren, wenn er ein Abschließen vergessen hat und sich vom Fahrzeug entfernt oder gar die Verriegelung in diesem Falle automatisch vorzunehmen, wenn der Warnsignalgeber mit einer Verriegelungsautomatik gekoppelt wird.

In gleicher oder ähnlicher Art und Weise ist auch der Einsatz bei Haus-, Wohnungs- oder Hoteltüren denkbar.

Kinder und Kinderwagen können gesichert werden. Auch der Einsatz für lebende Tiere, wie beispielsweise bei Hunden, ist möglich.

Neben der bereits erwähnten Diebstahlsicherung von Waren, vorzugsweise in Kaufhäusern, ist auch eine Personenüberwachung in Gebäuden möglich, um beispielsweise Besucher in Unternehmen am Betreten von bestimmten Zonen zu hindern. Diese könnten dann, als solches unerkannt, ein zweites Sicherungselement 9, welches gleichzeitig eine Besucherkarte darstellt, tragen.

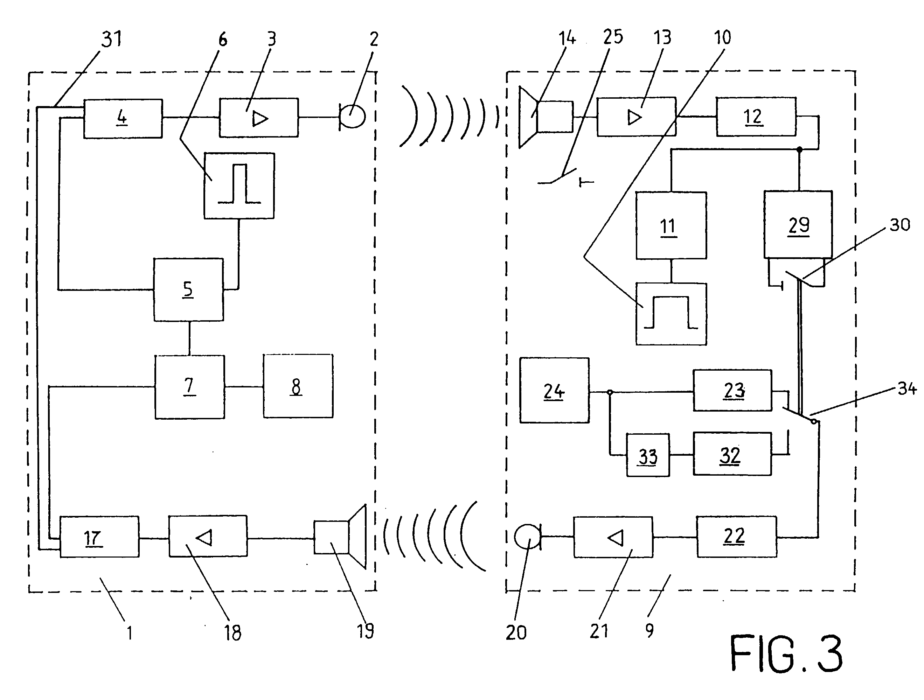

Wie in Fig. 3 dargestellt, ist das erste Sicherungselement 1 mit einem Ultraschallsensor 2 versehen, der über einen Verstärker 3 mit einem Dekoder 4 verbunden ist. Der Ausgang des Dekoders 4 liegt am Rücksetzeingang eines Zählers 5. Dieser Zähler 5 ist an seinem Zähleingang mit einem Taktgenerator 6 verbunden. Dadurch werden die von dem Taktgenerator 6 erzeugten Impulse gezählt, bis von dem Dekoder 4 ein Impuls auf den Rücksetzeingang des Zählers 5 gegeben wird. Damit beginnt der Zähler 5 erneut aufwärtszuzählen.

Erst wenn der Zähler 5 überläuft, gibt dessen Zählerausgang, der mit einer Warnsignalauslöseschaltung 7 verbunden ist, diese frei. Damit wird ein akustischer Warnsignalgenerator 8 eingeschaltet und es ertönt im ersten Sicherungselement 1 ein Warnsignal.

In einem zweiten Sicherungselement 9 ist ein Taktgenerator 10 vorgesehen, der in zeitlichen Abständen einen Ultraschallgenerator 11 erregt. Das Ultraschallsignal wird mittels eines Kodierers 12 in ein kodiertes Signal umgewandelt, welches über einen Verstärker 13 an einen Ultraschallwandler 14 gegeben wird, von dem es ausgestrahlt wird und zum Ultraschallsensor 2 des ersten Sicherungselementes 1 gelangt, wenn der Abstand zwischen dem ersten 1 und dem zweiten Sicherungselement 9 nur so groß ist, daß ein Empfang gesichert werden kann.

Die Warnsignalauslöseschaltung 7 ist weiterhin mit einem zweiten Ultraschallgenerator 17 versehen, der ein kodiertes Ultraschallsignal erzeugt und über einen Verstärker 18 einem zweiten Ultraschallwandler 19 zuführt.

Dieses Ultraschallsignal weist infolge einer höheren Verstärkung eine größere Amplitude auf als das Ultraschallsignal des Ultraschallwandlers 14, wodurch dessen Reichweite erheblich größer ist. Bei Auftreten eines Warnsignales am ersten Sicherungselement 1, d.h. wenn durch den Ultraschallsensor 2 kein Ultraschallsignal mehr empfangen wird, kann nunmehr im zweiten Sicherungselement ein zweiter Ultraschallsensor 18 mit einem nachfolgenden Verstärker 21 und einem Dekoder 22 eine Warnsignalauslöseschaltung 23 freigeben, die einen zweiten Warnsignalgenerator 24 aktiviert, wodurch auch im zweiten Sicherungselement 9 ein Warnsignal ertönt.

Der Eingang des Codierers 12 ist zusätzlich mit einem Steuersignalgeber 29 verbunden. Dieser Steuersignalgeber 29 ist über einen Schalter 30 einschaltbar, wodurch im Codierer 12 ein Steuersignal auf das Sendesignal aufmoduliert wird und über den Verstärker 13 an den Ultraschallwandler 14 gegeben wird.

Dieses Steuersignal wird von dem Ultraschallsensor 2 im ersten Sicherungselement 1 empfangen und über den Verstärker 3 an den Dekoder 4 weitergeleitet, wodurch eine direkte Steuerleitung 31 aktiviert wird und den zweiten Ultraschallgenerator 17 einschaltet. Damit wird über den Verstärker 18 und den Ultraschallwandler 17 ein zusätzliches Ultraschallsignal an den zweiten Ultraschallsensor 20 im zweiten Sicherungselement 9 gegeben.

In dem zweiten Sicherungselement 9 ist zwischen dem Dekoder 22 und dem zweiten Warnsignalgenerator 24 eine Entfernungsmeßschaltung 32 und ein mit dieser verbundener Modulator 33 zuschaltbar angeordnet.

Dabei bewirkt ein Umschalter 34, der mit dem Schalter 30 gekoppelt ist, ein Umschalten von der Betriebsart "Überwachen" auf die Betriebsart "Suchen" dadurch, daß beim beabsichtigten Suchen des Gegenstandes, an dem sich das erste Sicherungselement befindet, der Schalter 30 und damit der Umschalter 34 in die andere Position als in der Zeichnung dargestellt gebracht wird. Damit erzeugt der Steuersignalgeber das Steuersignal, welches schließlich zu einem dauernden oder dauernd intermittierenden Senden des Zusatzsendesignales führt, aus dem sodann in der Entfernungsmeßschaltung 32 ein Entfernungsmeßsignal an den Modulator 33 gegeben wird, der die Tonhöhe oder die Amplitude im zweiten Warnsignalgenerator entsprechend der festgestellten Entfernung moduliert.

### Bezugszeichenliste

- 1: erstes Sicherungselement
- 2: Ultraschallsensor
- 3: Verstärker
- 4: Dekoder
- 5: Zähler
- 6: Taktgenerator
- 7: Warnsignalauslöseschaltung
- 8: Warnsignalgenerator
- 9: zweites Sicherungselement
- 10: Taktgenerator
- 11: Ultraschallgenerator
- 12: Kodierer
- 13: Verstärker
- 14: Ultraschallwandler
- 15: Aussparung
- 16: Anschriftenfeld
- 17: zweiter Ultraschallgenerator
- 18: Verstärker
- 19: zweiter Ultraschallwandler
- 20: zweiter Ultraschallsensor
- 21: Verstärker
- 22: Dekoder
- 23: Warnsignalauslöseschaltung
- 24: zweiter Warnsignalgenerator
- 25: Ein/Aus-Schalter
- 26: Bereitschaftsanzeige
- 27: Potentiometer
- 28: Clip
- 29: Steuersignalgeber
- 30: Schalter
- 31: direkte Steuerleitung
- 32: Entfernungsmeßschaltung
- 33: Modulator
- 34: Umschalter

## Patentansprüche

1. Verfahren zur Sicherung von Personen oder Gegenständen, bei dem bei einer unerlaubten Annäherung oder Entfernung von Personen oder Gegenständen ein Warnsignal ausgelöst wird, wobei von einem Sender ein Signal gesendet wird, mittels dem eine Sperrung einer Auslösung des Warnsignales erfolgt, bis die Entfernung zwischen Sender und Empfänger eine vorbestimmbare Größe über-oder unterschreitet oder der Sendeweg zwischen Sender und Empfänger unterbrochen wird, indem aus dem von einem Empfänger erhaltenen Empfangssignal ein die Entfernung zwischen dem Sender und dem Empfänger repräsentierendes Entfernungssignal ermittelt und mit einem voreinstellbaren Sollwert verglichen wird und eine positive oder eine negative Abweichung vom Sollwert das Warnsignal auslöst, **dadurch gekennzeichnet** , daß das Entfernungssignal eine seiner Größe entsprechende Änderung der Tonhöhe oder der Lautstärke des Warnsignales auslöst.

2. Verfahren zur Sicherung von Personen oder Gegenständen nach Anspruch 1, **dadurch gekennzeichnet** , daß das Entfernungssignal aus einer Messung des Pegels des Empfangssignales und einer Differenzbildung mit dem bekannten Pegel des Sendesignales gewonnen wird.

3. Verfahren zur Sicherung von Personen oder Gegenständen nach Anspruch 1, **dadurch gekennzeichnet** , daß das Entfernungssignal aus der Messung der Zeitdifferenz zwischen den Zeitpunkten des Sendens und des Empfangens gewonnen wird.

4. Verfahren zur Sicherung von Personen oder Gegenständen nach Anspruch 3, **dadurch gekennzeichnet**, daß sowohl im Sender als auch im Empfänger eine zueinander synchrone Zeittakterzeugung erfolgt, daß durch diesen Zeittakt die Sendezeitpunkte festgelegt werden und daß die Zeitdifferenz zwischen dem Auftreten des Empfangssignales und dem Sendezeitpunkt, der durch die synchrone Zeittakterzeugung auch im Empfänger bekannt ist, gemessen wird.

5. Verfahren zur Sicherung von Personen oder Gegenständen nach Anspruch 1, **dadurch gekennzeichnet**, daß das Sendesignal intermittierend gesendet wird, wobei der Zwischenzeitraum zwischen zwei Sendungen des Sendesignales stets gleich ist und daß ein Entfernungsänderungssignal dadurch erzeugt wird, daß die Zwischenzeiträume des Empfangssignales gemessen und mit dem jeweils vorangegangenen Zwischenzeitraum verglichen werden und daß das Entfernungsänderungssignal eine seiner Größe entsprechende Änderung der Tonhöhe oder der Lautstärke des Warnsignales auslöst.

6. Verfahren zur Sicherung von Personen oder Gegenständen nach Patentanmeldung nach einem der Ansprüche 1 bis 5, **dadurch gekennzeichnet**, daß von einem in räumlicher Nähe zum Empfänger befindlichen Zusatzsender zu einem in räumlicher Nähe zum Sender befindlichen Zusatzempfänger ein Zusatzsendesignal gesandt wird, aus dem ein die Entfernung zwischen dem Sender und dem Empfänger repräsentierendes Zusatzentfernungssignal ermittelt wird, durch das eine seiner Größe entsprechende Änderung der Tonhöhe oder der Lautstärke eines durch das Zusatzsendesignal ausgelösten Warnsignales vorgenommen wird.

7. Verfahren zur Sicherung von Personen oder Gegenständen nach Anspruch 6, **dadurch gekennzeichnet**, daß das Sendesignal zuschaltbar mit einem kodierten Steuersignal beaufschlagt wird, durch das das Zusatzsendesignal dauernd oder dauernd intermittierend gesendet wird.

8. Anordnung zur Sicherung von Personen oder Gegenständen mit einem ersten Sicherungselement, welches an einem zu sichernden Gegenstand befestigbar ist, und einem tragbaren oder beliebig befestigbaren zweiten Sicherungselement, wobei eine eine drahtlose oder Leitungsverbindung zwischen dem ersten und dem zweiten Sicherungselement besteht, und mit einem durch Abstandsveränderung zwischen den Sicherungselementen oder durch Verbindungsunterbrechung auslösbaren Warnsignalgeber, der in oder in der räumlichen Nähe eines der Sicherungselemente angeordnet ist, **dadurch gekennzeichnet**, daß in dem ersten Sicherungselement (1) ein zweiter Sender (19) und in dem zweiten Sicherungselement (9) ein korrespondierender zweiter Empfänger (20) angeordnet ist, der mit einem zweiten Warnsignalgeber (24) verbunden ist, und daß zwischen dem zweiten Empfänger (20) und dem zweiten Warnsignalgeber (24) ein Mittel (32) zur Erzeugung eines Zusatzentfernungssignales und eine damit verbundene Modulationsschaltung (33) zur Modulation des zweiten Warnsignalgebers (24) angeordnet ist.

9. Anordnung zur Sicherung von Personen oder Gegenständen nach Anspruch 8, **dadurch gekennzeichnet**, daß im zweiten Sicherungselement (9) eine mit einem nach außen geführten Schalter (30) versehene Kodierschaltung (29) angeordnet ist, die über das Sendesignal mit einer Aktivierungsschaltung (31) im ersten Sicherungselement (1) zur Aktivierung des Dauersendens des Zusatzsenders (19) in Wirkungsverbindung steht.

## Claims

1. A method for the protection of people or objects in which a warning signal is triggered in the event of the unauthorised approach or withdrawal of people or objects, where a transmitter sends a signal which blocks the triggering of the warning signal until the distance between the transmitter and the receiver exceeds or falls below a predeterminable value, or the transmission path between the transmitter and the receiver is interrupted in that a distance signal representing the distance between the transmitter and the receiver is determined from a receiving signal detected by a receiver and compared with a preselectable setpoint value, and a positive or negative deviation from the setpoint value triggers the warning signal, **character-ised in that** the distance signal triggers a change in the tone or volume of the warning signal corresponding to its magnitude.

2. A method for the protection of people or objects as per Claim 1, **characterised in that** the distance signal is obtained by measuring the level of the receiving signal and subtracting it from the known level of the transmission signal.

3. A method for the protection of people or objects as per Claim 1, **characterised in that** the distance signal is obtained by measuring the time difference between the time of transmission and the time of reception.

4. A method for the protection of people or objects as per Claim 3, **characterised in that** a synchronous time pulse is generated in both the transmitter and the receiver, that the times of transmission are determined by this time pulse and that the time difference between the occurrence of the receiving signal and the time of transmission - which is also known in the receiver due to the synchronous time pulse generation - is measured.

5. A method for the protection of people or objects as per Claim 1, **characterised in that** the transmission signal is sent intermittently, where the time interval between two transmissions of the transmission signal is always the same, and that a distance change signal is generated in that the time intervals between receiving signals are measured and compared with the respective preceding time interval and that the distance change signal triggers a change in the tone or volume of the warning signal corresponding to its magnitude.

6. A method for the protection of people or objects in accordance with the patent application as per one of the Claims 1 to 5, **characterised in that** an auxiliary transmission signal is sent from an auxiliary transmitter located in close proximity to the receiver to an auxiliary receiver located in close proximity to the transmitter, from which an auxiliary distance signal representing the distance between the transmitter and the receiver is determined, which changes the tone or volume of a warning signal triggered by the auxiliary transmission signal in accordance with its magnitude.

7. A method for the protection of people or objects as per Claim 6, **characterised in that** a connectable, coded control signal is applied to the transmission signal which causes the auxiliary transmission signal to be sent continuously or continuously intermittently.

8. A device for the protection of people or objects with a first mounting element, which can be attached to an object to be protected, and a portable or variably mountable second mounting element, where there is either a wireless or wired connection between the first and second mounting elements, and with a warning signal transmitter located in, or in close proximity to, one of the mounting elements, which can be triggered by a change in distance between the mounting elements or by an interruption of the connection, **characterised in that** a second transmitter (19) is located in the first mounting element (1) and a corresponding second receiver (20), connected to a second warning signal transmitter (24), is located in the second mounting element (9), and that a device (32) for generating an auxiliary distance signal and a connected modulation circuit (33) for modulating the second warning signal transmitter (24) are located between the second receiver (20) and the second warning signal transmitter (24).

9. A device for the protection of people or objects as per Claim 8, **characterised in that** the second mounting element (9) contains a coding circuit (29) with an external switch (30) which is linked to an activation circuit (31) in the first mounting element (1) via the transmission signal in order to activate the continuous transmission of the auxiliary transmitter (19).

## Revendications

1. Procédé et installation pour assurer la sécurité de personnes et d'objets où, lors d'une approche ou d'un éloignement non autorisés de personnes ou d'objets, il est déclenché un signal avertisseur, où un émetteur émet un signal ayant pour effet le blocage d'un déclenchement du signal avertisseur jusqu'à ce que la distance entre émetteur et récepteur dépasse vers le haut ou vers le bas une valeur prédéterminée ou que le trajet d'émission entre émetteur et récepteur soit interrompu, où, à partir d'un signal reçu par un récepteur, il est recherché un signal de distance représentant la distance entre l'émetteur et le récepteur lequel signal de distance est comparé à une valeur de consigne préréglable et où un écart positif ou négatif de la valeur de consigne déclenche le signal avertisseur, procédé et installation caractérisés en ce que le signal de distance déclenche, en fonction de sa valeur, une modification de la hauteur ou de l'intensité de son du signal avertisseur.

2. Procédé et installation pour assurer la sécurité de personnes et d'objets suivant revendication 1, caractérisés en ce que le signal de distance est obtenu par un mesurage du niveau du signal récepteur et une formation de différence par rapport au niveau connu du signal émetteur.

3. Procédé et installation pour assurer la sécurité de personnes et d'objets suivant revendication 1, caractérisés en ce que le signal de distance est obtenu par le mesurage de la différence de temps entre les moments de l'émission et de la réception.

4. Procédé et installation pour assurer la sécurité de personnes et d'objets suivant revendication 3, caractérisés en ce que, dans l'émetteur aussi bien que dans le récepteur, il se produit une génération de cadence synchrone l'une à l'autre, que cette cadence détermine les moments d'émission et que la différence de temps entre la production du signal récepteur et le moment d'émission qui, par la génération de cadence synchrone est connu dans le récepteur aussi, est mesurée.

5. Procédé et installation pour assurer la sécurité de personnes et d'objets suivant revendication 1, caractérisés en ce que le signal émetteur est émis de façon intermittente, où l'intervalle entre deux émissions du signal émetteur est toujours égal, et qu'un signal de modification de distance est produit par mesurage des intervalles du signal récepteur et par comparaison à l'intervalle précédent respectif, et que le signal de modification de distance déclenche, en fonction de sa valeur, une modification de la hauteur ou de l'intensité du son du signal avertisseur.

6. Procédé et installation pour assurer la sécurité de personnes et d'objets suivant une des revendications 1 à 5, caractérisés en ce qu' un émetteur additionnel se trouvant à proximité du récepteur émet un signal émetteur additionnel vers un récepteur additionnel se trouvant à proximité de l'émetteur lequel signal émetteur permet de rechercher un signal de distance additionnel représentant la distance entre l'émetteur et le récepteur et provoquant, en fonction de sa valeur, une modification de la hauteur ou de l'intensité du son d'un signal avertisseur déclenché par le signal émetteur additionnel.

7. Procédé et installation pour assurer la sécurité de personnes et d'objets suivant revendication 6, caractérisés en ce qu'il est attribué au signal émetteur un signal de commande codé connectable par lequel le signal émetteur additionnel est émis en permanence ou intermittent en permanence.

8. Procédé et installation pour assurer la sécurité de personnes et d'objets avec un premier élément d'alarme pouvant être fixé à un objet à assurer et avec un deuxième élément d'alarme portable ou pouvant être fixé de manière quelconque, où il existe une liaison sans fil ou par ligne entre le premier et le deuxième élément d'alarme, et avec un émetteur de signal avertisseur déclenchable par modification de distance entre les éléments d'alarme ou par interruption de liaison, lequel émetteur de signal avertisseur se trouve à proximité d'un des éléments d'alarme, caractérisés en ce qu'il est disposé, dans le premier élément d'alarme (1), un deuxième émetteur (19) et, dans le deuxième élément d'alarme (9), un deuxième récepteur (20) correspondant qui est relié à un deuxième émetteur de signal avertisseur (24), et qu'il est disposé, entre le deuxième récepteur (20) et le deuxième émetteur de signal avertisseur (24), un moyen (32) pour la génération d'un signal de distance additionnel et un montage de modulation (33) relié audit moyen (32) pour la modulation du deuxième émetteur de signal avertisseur (24) .

9. Procédé et installation pour assurer la sécurité de personnes et d'objets suivant revendication 8, caractérisés en ce qu'il est disposé, dans le deuxième élément d'alarme (9), un montage de codage (29) pourvu d'un interrupteur (30) conduit à l'extérieur et se trouvant en liaison d'action, par l'intermédiaire du signal émetteur, avec un montage d'activation (31) dans le premier élément d'alarme (1) pour activer l'émission permanente de l'émetteur additionnel (19).
